# EUROPÄISCHE PATENTSCHRIFT

(11) **EP 1 501 969 B1**
(45) Veröffentlichungstag und Bekanntmachung des Hinweises auf die Patenterteilung: **16.05.2007**
(21) Anmeldenummer: 03722478.9
(22) Anmeldetag: 15.04.2003
(51) Int. Cl.: D03D 1/00

(54) **VERFAHREN ZUR HERSTELLUNG VON SICHERHEITSGURTBÄNDERN**
METHOD FOR PRODUCING SECURITY BELT BANDS
PROCEDE POUR REALISER DES SANGLES DE CEINTURES DE SECURITE

(30) Priorität: 23.04.2002 DE 10218134
(43) Veröffentlichungstag der Anmeldung: 02.02.2005
(73) Patentinhaber: Diolen Industrial Fibers GmbH, 42103 Wuppertal (DE)
(72) Erfinder: BOSMAN, Rigobert, Leon, Maria, NL-6824 KC Arnhem (NL); WIEGERINCK, Marcel, Johannes, Josephus, 7828 CB Emmen (NL); DOLL, Andreas, 63739 Aschaffenburg (DE)
(74) Vertreter: Oberlein, Gerriet H. R.
(86) Internationale Anmeldenummer: PCT/EP2003/003897
(87) Internationale Veröffentlichungsnummer: WO 2003/091489

(56) Entgegenhaltungen:
- WO-A-92/03603
- DE-A- 2 902 905
- DE-A- 3 521 262
- DE-A- 19 537 700
- US-A- 3 926 227

## Beschreibung

Die vorliegende Erfindung betrifft ein Verfahren zur Herstellung von Sicherheitsgurtbändern, wobei die Bänder zunächst unter Verwendung von wenigstens zwei synthetischen Garnen unterschiedlicher Farbe, von denen wenigstens ein Garn spinngefärbt ist, und unter Verwendung an sich bekannter Bindungen gewebt werden. Weiterhin ist die Erfindung auf Sicherheitsgurte gerichtet, die solche Sicherheitsgurtbänder enthalten.

Ein solches Verfahren zur Herstellung von Sicherheitsgurtbändern ist bekannt. So beschreibt die DE-A-2902905 ein Verfahren zur Herstellung buntfarbig gemusterter Sicherheitsgurtbänder für Automobile, Flugzeuge oder dergleichen, bei dem die Bänder unter Verwendung von wenigstens zwei spinngefärbten synthetischen Garnen unterschiedlicher Farbe, wobei wenigstens ein Garn eine bunte Farbe besitzt, und unter Verwendung an sich bekannter Bindungen gewebt werden. Die spinngefärbten Sicherheitsgurtbänder der DE-A-2902905 sollen sich durch eine optimale Farbgleichmäßigkeit innerhalb der Farben und Muster, optimale Scheuerfestigkeit sowie Wärme- und Lichtbeständigkeit auszeichnen. Weiterhin sollte damit der Nachteil der Verwendung von garngefärbten Typen oder stückgefärbten Bänden, nämlich die den damals bekannten Farbstoffen anhaftende schlechte Farbechheit, überwunden werden.

Die Anforderungen bezüglich Verwendbarkeit, Einsatzbereich und Haltbarkeit von Sicherheitsgurtbänder sind hoch. So werden nicht nur hohe Ansprüche an Scheuerfestigkeit sowie Licht- und Wärmebeständigkeit und dergleichen gestellt, sondern es ist ebenfalls wichtig, dass sich Sicherheitsgurtbänder gleichfalls bequem anlegen oder ablegen lassen und während des Einsatzes stets sicher und komfortabel am Benutzer anliegen. Für die zuletzt genannten Eigenschaften ist insbesondere ein gutes Aufrollverhalten der Sicherheitsgurtbänder verantwortlich. Neben einer gut eingestellten und auf den jeweiligen Einsatz der Sicherheitsgurtbänder abgestimmten Aufrollmechanik sind dafür insbesondere die Materialeigenschaften der Bänder verantwortlich. Innerhalb der Materialeigenschaften ist dabei besonders die Oberfläche der Gurtbänder zu nennen, deren Struktur und Eigenschaften das Aufrollverhalten maßgeblich beeinflussen.

Es hat nicht an Versuchen gefehlt, die Oberflächeneigenschaften der Sicherheitsgurtbänder bezüglich des Aufrollverhaltens zu beeinflussen. Dabei ist insbesondere der Schritt der Thermofixierung zu nennen, bei dem im Anschluß an den Webvorgang die Garne z.B. einer Heißluftbehandlung unterworfen werden, was unter anderem zu einer glatteren und damit hinsichtlich des Aufrollverhaltens verbesserten Oberfläche der so behandelten Bänder führt.

Leider haben sich auch diese Behandlungsschritte nicht in allen Fällen bewährt. So ist gerade beim Einsatz der Sicherheitsgurtbänder unter extremen Bedingungen, wie z.B. bei sehr hohen oder insbesondere bei sehr niedrigen Temperaturen, das Aufrollverhalten von Sicherheitsgurtbändern nicht befriedigend. Naturgemäß zeigen sich diese Probleme besonders zu Anfang des Einsatzes eines solchen Sicherheitsgurtbandes am deutlichsten, also beispielsweise beim Anlegen des Gurtbandes in einem Fahrzeug, das sich eine Zeitlang unter dem Einfluß von sehr hohen oder niedrigen Temperaturen befand. Dieses ist typischerweise beim Start am Morgen nach kalten Nächten der Fall oder wenn das Fahrzeug im Sommer längere Zeit in der prallen Sonne stand. Zwar verbessert sich das Aufrollverhalten üblicherweise anschließend unter dem Einfluß von Heizung oder Klimatisierung im Fahrzeug. Dieses ist aber auch nicht immer der Fall, nämlich beispielsweise dann nicht, wenn das Fahrzeug nur kurzzeitig bewegt wird oder geeignete, leistungsfähige Klimaeinrichtungen schlichtweg nicht zur Verfügung stehen.

Aufgabe der vorliegenden Erfindung ist es daher, ein Verfahren zur Herstellung von Sicherheitsgurtbändern zu Verfügung zu stellen, bei denen die Nachteile des Standes der Technik zumindest verringert werden und welche insbesondere bei sehr niedrigen Temperaturen ein gutes Aufrollverhalten aufweisen. Weiterhin sollen die übrigen positiven Eigenschaften der Sicherheitsgurtbändern, wie Farbechtheit, Scheuerfestigkeit sowie Wärme- und Lichtbeständigkeit wenigstens auf dem gewohnt hohen Niveau erhalten bleiben.
Weitere Vorteile ergeben sich aus der weiteren Beschreibung.

Die Aufgabe wird erfindungsgemäß dadurch gelöst, dass sich das im Oberbegriff des Anspruchs 1 beschriebene Verfahren dadurch auszeichnet, dass die Bänder einer Behandlung durch ein Wasserbad enthaltend mindestens einen Dispersionsfarbstoff unterzogen werden.

Durch diesen zusätzlichen Schritt werden völlig überraschend Sicherheitsgurtbänder erhalten, die sich gegenüber den mittels bekannter Verfahren erhaltenen Bänder durch ein verbessertes Aufrollverhalten auszeichnen. Insbesondere manifestiert sich dieser Vorteil bei sehr tiefen Temperaturen, wie sie beispielsweise über lange zeitliche Perioden in Gegenden in der Nähe des Polarkreises herrschen.

Insbesondere hat es sich gezeigt, dass die Anwesenheit von Dispersionsfarbstoffen in den Bädern überraschenderweise eine wichtige Rolle spielt. Die Behandlung der gewebten Bänder durch die Badflüssigkeit alleine hat praktisch keinen Einfluß auf die Oberflächenstruktur und damit auf das Aufrollverhalten. Vermutlich kommt es durch das Eindringen der Dispersionsfarbstoffe in die Oberfläche zu einer Glättung, die sich besonders vorteilhaft auf die Aufrolleigenschaften derartig hergestellter Bänder auswirkt.

Es hat sich insbesondere gezeigt, dass es bereits genügt, wenn das Wasserbad lediglich einen Dispersionsfarbstoff enthält, was aus technischen und ökonomischen Gründen besonders bevorzugt ist. Das Behandeln im Wasserbad mit Dispersionsfarbstoffen ist dem Fachmann an sich bekannt und erfolgt zweckmäßigerweise bei Temperaturen zwischen 40 und 90 °C. Dispersionsfarbstoffe selbst sind dem Fachmann gleichwohl bekannt. Für das beanspruchte Verfahren ist die Art des Dispersionsfarbstoffes nicht ausschlaggebend, es können daher ohne Einschränkungen alle üblichen Dispersionsfarbstoffe eingesetzt werden.

Es ist für das erfindungsgemäße Verfahren weiterhin bevorzugt, wenn die synthetischen Garne hochfeste Polyestergarne sind. In diesem Fall lassen sich besonders gute Oberflächeneigenschaften durch die Dispersionsfarbstoffe erzielen. Außerdem erfüllen diese Materialien die für Sicherheitsgurte verlangten hohen Anforderungen an die Reißkraft.

Insbesondere sind diese Garne solche aus Polyethylenterephthalat mit einer Reißfestigkeit von 50 bis 100 cN/tex, vorzugsweise von 60 bis 90 cN/tex. Die verschiedenen Garne (rohweiß und spinngefärbt) sollten ein einheitliches Heißluftschrumpfniveau (nach 15 min, bei 190 °C) zwischen 8 und 22%, vorzugsweise von 10 bis 20 %, besitzen.

Die Bruchdehnung der Garne soll einheitlich vorzugsweise zwischen 10 und 20%, insbesondere zwischen 14 und 17%, liegen.

Schließlich soll der Gesamttiter der synthetischen Garne zwischen 100 und 3000 dtex, vorzugsweise zwischen 550 und 1800 dtex, liegen, wobei der Einzeltiter von 5 bis 30 dtex reichen kann, aber vorzugsweise von 8 bis 20 dtex liegen soll.

Es ist weiterhin bevorzugt, dass das Verfahren gemäß der vorliegenden Erfindung noch den an sich bekannten Thermofixierschritt enthält, der dazu führt, dass die vorteilhaften Eigenschaften der erhaltenen Sicherheitsgurtbänder erhalten bleiben.

Die Erfindung ist weiterhin auf Sicherheitsgurtbänder gerichtet, die herstellbar bzw. erhältlich sind nach dem erfindungsgemäßen Verfahren. Derartige Sicherheitsgurtbänder weisen aufgrund ihres Herstellungsprozess die oben beschriebenen vorteilhaften Eigenschaften, insbesondere also das verbesserte Aufwickel- bzw. Aufrollverhalten, auf.

Schließlich werden aus den erfindungsgemäß hergestellten Sicherheitsgurtbändern hergestellte Sicherheitsgurte für Automobile, Flugzeuge oder dergleichen beansprucht.

Wie bereits beschrieben, erlaubt das erfindungsgemäße Verfahren gleichzeitig auch die Herstellung von Sicherheitsgurtbändern mit großer Farb- und Mustervielfalt, die z.B. durch unterschiedliche Bindungen und/oder unterschiedliche Farbfolgen erhältlich sind. Unter Bindungen werden die in der Webereitechnik bekannten verschieden Arten der Verkreuzung von Kett- und Schussfäden verstanden, beispielsweise die systematisch aufgebauten Grundbindungen Leinwandbindung, Köperbindung und Atlasbindung. Derartige Bindungen sind dem Fachmann an sich bekannt. Bevorzugt wird in diesem Zusammenhang, wenn wenigstens eines der für das Weben des Sicherheitsgurtbandes eingesetzten spinngefärbten Garne eine bunte Farbe, wie z.B. Gelb, besitzt, weil hierdurch eine noch größere Vielfalt an Färbungen und Mustern erhalten wird.

Der Einsatz spinngefärbter und rohweißer synthetischer Garne für Sicherheitsgurtbänder in Verbindung mit an sich bekannten Webtechniken zusammen mit dem Verfahrensschritt der Behandlung in einem Wasserbad enthaltend Dispersionsfarbstoffe führt zum Erhalt von unterschiedlichen Farbfolgen, Farbtönen und Mustern. Durch geeignete Kombination von unterschiedlich spinngefärbten und rohweißen Garnen, Bindungen und Dispersionsfarbstoffen lassen sich - gewissermaßen als zusätzlicher Vorteil - beliebige Farb- und Musterkombinationen in den erhaltenen Sicherheitsgurtbändern einstellen.

Dadurch liefert das erfindungsgemäße Verfahren nicht nur Sicherheitsgurtbänder mit verbesserten Aufrolleigenschaften, sondern es erlaubt zugleich die Herstellung optisch ansprechender Gewebe mit großer Vielfalt in Musterung und Farbabtönung.

Die Erfindung wird anhand des nachstehenden, nicht einschränkenden Beispiels näher erläutert.
Ein Sicherheitsgurtband wurde gewebt aus Polyethylenterephthalatgarnen des Titers 1670f105 ungedreht. Ein Teil der Garne war rohweiß, ein anderer Teil war spinngefärbt unter Einsatz des gelben Pigmentfarbstoffs Rowasol FL-31180, der der Schmelze zugefügt worden war. Nach dem Weben bestand das Sicherheitsgurtband aus rohweißen und gelben Abschnitten. Das so erhaltene Band wurde anschließend in einem Wasserbad enthaltend einen blauen Dispersionsfarbstoff (Polysynthren Blue RBL = Blue 104 der Fa. Clariant) bei 50 °C behandelt und nachfolgend bei etwa 180 °C mit Heißluft thermofixiert.
Aus diesem Sicherheitsgurtband wurde ein Sicherheitsgurt hergestellt, der in einen Pkw eingebaut wurde. Dieser Pkw wurde 12 h lang in einer Kältekammer bei minus 20 °C gehalten und das Aufrollverhalten mit einem ebenfalls in diesem Pkw eingebauten Sicherheitsgurt verglichen, der auf die gleiche Weise wie vorstehend beschrieben hergestellt wurde, mit dem Unterschied, dass dabei das Wasserbad keinen Dispersionsfarbstoff enthielt.
Beide Gurte wurden 100 mal ausgezogen und wieder losgelassen. Dabei zeigte sich, dass der nach dem erfindungsmä e n Verfahren erhaltene Sicherheitsgurt deutlich häufiger vollständig aufrollte als der Vergleichsgurt.

## Patentansprüche

1. Verfahren zur Herstellung von Sicherheitsgurtbändern, wobei die Bänder zunächst unter Verwendung von wenigstens zwei synthetischen Garnen unterschiedlicher Farbe, von denen wenigstens ein Garn spinngefärbt ist, und unter Verwendung an sich bekannter Bindungen gewebt werden, **dadurch gekennzeichnet, dass** die Bänder anschließend einer Behandlung durch ein Wasserbad enthaltend mindestens einen Dispersionsfarbstoff unterzogen werden.

2. Verfahren nach Anspruch 1, **dadurch gekennzeichnet, dass** das Wasserbad nur einen Dispersionsfarbstoff enthält.

3. Verfahren nach Anspruch 1 oder 2, **dadurch gekennzeichnet, dass** der Behandlung durch das Wasserbad enthaltend mindestens einen Dispersionsfarbstoff noch ein Thermofixierschritt folgt.

4. Verfahren nach einem oder mehreren der Ansprüche 1 bis 3, **dadurch gekennzeichnet, dass** die synthetischen Garne hochfeste Polyestergarne sind.

5. Verfahren nach Anspruch 4, **dadurch gekennzeichnet, dass** die Polyestergarne aus Polyethylenterephthalat bestehen und eine Reißfestigkeit von 50 bis 100 cN/tex, vorzugsweise von 60 bis 90 cN/tex besitzen.

6. Verfahren nach Anspruch 4 oder 5, **dadurch gekennzeichnet, dass** die Polyestergarne einen Heißluftschrumpf (15 min, 190 °C) von 8 bis 22%, vorzugsweise von 10 bis 20 % besitzen.

7. Verfahren nach einem oder mehreren der Ansprüche 4 bis 6, **dadurch gekennzeichnet, dass** die Polyestergarne eine Bruchdehnung von 10 bis 20%, vorzugsweise zwischen 14 und 17% besitzen.

8. Verfahren nach einem oder mehreren der Ansprüche 1 bis 7, **dadurch gekennzeichnet, dass** die synthetischen Garne einen Gesamttiter von 100 bis 3000 dtex, vorzugsweise von 550 bis 1800 dtex besitzen, bei einem Einzeltiter von 5 bis 30 dtex, vorzugsweise von 8 bis 20 dtex.

9. Verfahren nach einem oder mehreren der Ansprüche 1 bis 8, **dadurch gekennzeichnet, dass** wenigstens eines der spinngefärbten Garne eine bunte Farbe besitzt.

10. Sicherheitsgurtbänder enthaltend Bänder in an sich bekannter Bindung aus wenigstens zwei synthetischen Garnen unterschiedlicher Farbe, von denen wenigstens ein Garn spinngefärbt ist, **dadurch gekennzeichnet, dass** die Bänder mindestens einen Dispersionsfarbstoff enthalten.

11. Sicherheitsgurte für Automobile, Flugzeuge oder dergleichen enthaltend Sicherheitsgurtbänder nach Anspruch 10.

## Claims

1. A method for production of seat belt webbing wherein the webbing is first woven using at least two synthetic yarns of different colours, of which at least one yarn is spun-dyed, and using weaves that are known per se, **characterised in that** the webbing is subsequently subjected to treatment in a water-bath containing at least one disperse dye.

2. Method according to Claim 1, **characterised in that** the water-bath contains only one disperse dye.

3. Method according to Claim 1 or 2, **characterised in that** treatment in the water-bath containing at least one disperse dye is followed by a thermofixing step.

4. Method according to one or more of Claims 1 to 3, **characterised in that** the synthetic yarns are high-strength polyester yarns.

5. Method according to Claim 4, **characterised in that** the polyester yarns consist of polyethylene terephthalate and have a breaking tenacity of 50 to 100 cN/tex, preferably of 60 to 90 cN/tex.

6. Method according to Claim 4 or 5, **characterised in that** the polyester yarns have a hot-air shrinkage (15 min, 190 °C) of 8 to 22%, and preferably 10 to 20%.

7. Method according to one or more of Claims 4 to 6, **characterised in that** the polyester yarns have an elongation at break of 10 to 20%, and preferably between 14 and 17%.

8. Method according to one or more of Claims 1 to 7, **characterised in that** the synthetic yarns have a linear density of between 100 and 3000 dtex, and preferably between 550 and 1800 dtex, the filament linear density being between 5 and 30 dtex, and preferably between 8 and 20 dtex.

9. Method according to one or more of Claims 1 to 8, **characterised in that** at least one of the spun-dyed yarns has a bright colour.

10. Seat belt webbing comprising webbing woven in a way known per se from at least two synthetic yarns of different colours, of which at least one yarn is spun-dyed, **characterised in that** the webbing comprises al least one disperse dye.

11. Seat belts for vehicles, aircraft, etc. containing seat belt webbing in accordance with Claim 10.

## Revendications

1. Procédé de fabrication de sangles de ceinture de sécurité, dans lequel les sangles sont d'abord tissées en recourant à au moins deux fils synthétiques de couleurs différentes parmi lesquels au moins un fil est coloré lors du filage, et en recourant à des armures connues en soi, **caractérisé en ce que** les sangles subissent ensuite un traitement dans un bain aqueux qui contient au moins un colorant en dispersion.

2. Procédé selon la revendication 1, **caractérisé en ce que** le bain d'eau ne contient qu'un colorant en dispersion.

3. Procédé selon les revendications 1 ou 2, **caractérisé en ce que** le traitement dans le bain d'eau qui contient au moins un colorant en dispersion est encore suivi par une étape de thermofixation.

4. Procédé selon l'une ou plusieurs des revendications 1 à 3, **caractérisé en ce que** les fils synthétiques sont des fils de polyester à haute résistance mécanique.

5. Procédé selon la revendication 4, **caractérisé en ce que** les fils en polyester sont constitués de poly(téréphtalate d'éthylène) et ont une résistance à la déchirure de 50 à 100 cN/tex et de préférence de 60 à 90 cN/tex.

6. Procédé selon la revendication 4 ou 5, **caractérisé en ce que** les fils en polyester présentent un retrait à l'air chaud (pendant 15 min à 190°C) de 8 à 22 % et de préférence de 10 à 20 %.

7. Procédé selon l'une ou plusieurs des revendications 4 à 6, **caractérisé en ce que** les fils en polyester présentent un allongement à la rupture de 10 à 20 % et de préférence de 14 à 17 %.

8. Procédé selon l'une ou plusieurs des revendications 1 à 7, **caractérisé en ce que** les fils synthétiques ont un titre total de 100 à 3 000 dtex et de préférence de 550 à 1 800 dtex pour un titre individuel de 5 à 30 dtex et de préférence de 8 à 20 dtex.

9. Procédé selon l'une ou plusieurs des revendications 1 à 8, **caractérisé en ce qu'**au moins l'un des fils colorés lors du filage a une couleur bigarrée.

10. Sangles pour ceinture de sécurité qui contiennent des sangles d'armures connues en soi en au moins deux fils synthétiques de couleurs différentes parmi lesquels au moins un fil est coloré lors du filage, **caractérisé en ce que** les sangles contiennent au moins un colorant en dispersion.

11. Ceinture de sécurité pour automobiles, aéronefs ou similaires, qui contient des sangles de ceinture de sécurité selon la revendication 10
